# EUROPEAN PATENT APPLICATION

(11) **EP 4 617 332 A1**
(43) Date of publication of application: **17.09.2025**
(21) Application number: 23888342.5
(22) Date of filing: 14.09.2023
(51) Int. Cl.: C09D 11/322, B41J 2/01

(54) **EDIBLE INK FOR INKJET PRINTING**

(30) Priority: 10.11.2022 JP 2022180254
(71) Applicant: Toppan Holdings Inc., Tokyo 110-0016 (JP)
(72) Inventor: KOSEKI Seiya, Tokyo 110-0016 (JP); HASHIMOTO Risa, Tokyo 110-0016 (JP); MIYAZAWA Yasuhisa, Tokyo 110-0016 (JP); WATANABE Megumi, Tokyo 110-0016 (JP); HOSHINO Yuichi, Tokyo 110-0016 (JP); SAITO Masatoshi, Tokyo 110-0016 (JP); UCHIYAMA Hiromitsu, Tokyo 110-0016 (JP)
(74) Representative: TBK
(86) International application number: PCT/JP2023/033542
(87) International publication number: WO 2024/100988

(57) **Abstract**

The disclosure provides an edible ink for inkjet printing having excellent intermittent printing resumability and excellent dispersion stability even when stored for a long period of time, as well as having good quick-drying properties. The edible ink for inkjet printing contains water, an organic solvent, and an edible pigment. The organic solvent comprises at least one of 1-propanol, 1-butanol, and 2-butanol, and the content thereof is 20 mass% or more and 95 mass% or less relative to the total mass of the edible ink for inkjet printing.

## Description

### [Technical Field]

The present invention relates to edible inks for inkjet printing.

### [Background Art]

With a growing trend of Increasing the speed of inkjet printing, inks are required to have quick-drying properties. If inks do not dry quickly enough, there is a risk that undried inks may transfer from the printed surfaces to other articles. That is, in inkjet printing, the printed surfaces are required to have excellent transfer resistance. Quick-drying properties of inks can be improved using a mixed solvent of water and ethanol as an ink solvent (e.g., see PTL 1).

### [Citation List]

### [Patent Literature]

PTL 1: JP5830551B

### [Summary of the Invention]

### [Technical Problem]

However, although increase in mixing ratio of ethanol in the mixed solvent can improve quick-drying properties of the ink, the following issues may arise.

Firstly, when the inkjet printing device is stopped for some period of time and then printing is resumed, the nozzles that eject ink may become clogged due to dried ink, making it difficult to eject ink. In other words, there has been a risk that intermittent printing resumability would be insufficient. In particular, when performing printing on tablets, the amount of ink used is less than when performing printing on such media as paper, and therefore nozzle clogging was more likely to occur.

Secondly, if inks are stored for a long period of time, dispersion stability of pigments in the inks could deteriorate.

The present invention aims to provide an edible ink for inkjet printing having excellent intermittent printing resumability and excellent dispersion stability even when stored for a long period of time, as well as having good quick-drying properties.

### [Solution to Problems]

An edible ink for inkjet printing according to an aspect of the present invention contains water, an organic solvent, and an edible pigment, wherein the organic solvent comprises at least one of 1-propanol, 1-butanol, and 2-butanol; and the content of the organic solvent is 20 mass% or more and 95 mass% or less relative to the total mass of the edible ink for inkjet printing.

### [Advantageous Effects of the Invention]

According to the present invention, there is provided an edible ink for inkjet printing having excellent intermittent printing resumability and excellent dispersion stability even when stored for a long period of time, as well as having good quick-drying properties.

### [Description of the Embodiments]

An embodiment of the present invention will be described. It should be noted that the present embodiment shows only an example of the present invention and should not be construed as limiting the present invention. In addition, the present embodiment can be modified or improved in various ways, and such modified or improved modes should also be encompassed by the present invention.

The ink according to the present embodiment is an ink for inkjet printing and it is edible. The edible ink for inkjet printing according to the present embodiment contains water, an organic solvent, and an edible pigment. The organic solvent is at least one of 1-propanol (CH₃CH₂CH₂OH, boiling point: 97.2°C), 1-butanol (CH₃CH₂CH₂CH₂OH, boiling point: 117.7°C), and 2-butanol (CH₃CH(OH)CH₂CH₃, boiling point: 100°C), and the content of the organic solvent is 20 mass% or more and 95 mass% or less relative to the total mass of the edible ink for inkjet printing.

The edible ink for inkjet printing according to the present embodiment, which is composed as mentioned above, has good quick-drying properties and imparts excellent transfer resistance to printed surfaces. Using the edible ink for inkjet printing according to the present embodiment, nozzles that eject ink in the inkjet printing device are less likely to become clogged and thus are less likely to be brought into a state where ink is difficult to eject. Accordingly, the edible ink for inkjet printing according to the present embodiment has excellent intermittent printing resumability. In particular, even when performing printing on tablets, nozzle clogging is less likely to occur and excellent intermittent printing resumability is ensured. Furthermore, the edible ink for inkjet printing according to the present embodiment can impart excellent dispersion stability to the edible pigments in the ink even when the ink is stored for a long period of time.

Accordingly, the edible ink for inkjet printing according to the present embodiment can be used for performing printing on food- and pharmaceutical-related items, and the like. In particular, the edible ink for inkjet printing according to the present embodiment can be used for performing direct printing on capsule surfaces, direct printing on food, printing on packaging directly contacting medicines and food, and the like.

### [Organic solvent]

The organic solvent contained in the edible ink for inkjet printing according to the present embodiment comprises at least one of 1-propanol, 1-butanol, and 2-butanol. As the organic solvent, at least one of 1-propanol, 1-butanol, and 2-butanol may be singly used, or two of them may be used in combination, or all three of them may be used in combination. If two or three of them are used in combination, the ratio of use is not specifically limited. Due to having high level of safety, it is more preferable to use at least either of 1-propanol and 1-butanol from among 1-propanol, 1-butanol, and 2-butanol.

1-propanol, 1-butanol, and 2-butanol all form azeotropes with water. For example, the azeotropic point with water of 1-propanol is 87.7°C, and the azeotropic point with water of 1-butanol is 92.7. Accordingly, the edible ink for inkjet printing according to the present embodiment has good quick-drying properties and imparts excellent transfer resistance to printed surfaces.

If water and an organic solvent do not form an azeotrope, the organic solvent may volatilize earlier than water, and the proportion of water in the mixture of water and an organic solvent may gradually increase. As a result, nozzles that eject ink in the inkjet printing device are likely to become clogged and, when the ink is stored for a long period of time, dispersion stability of the pigment in the ink may be deteriorated.

However, in the edible ink for inkjet printing according to the present embodiment, water and an organic solvent form an azeotrope, and therefore the ratio of water to the organic solvent in the mixture is less likely to change significantly. For this reason, nozzles that eject ink in the inkjet printing device are less likely to become clogged, leading to ensuring excellent intermittent printing resumability, and ensuring excellent dispersion stability even when the ink is stored for a long period of time, due to the edible pigment in the ink having dispersion stability less likely to deteriorate even when stored for a long period of time.

The content of the organic solvent is required to be 20 mass% or more and 95 mass% or less relative to the total mass of the edible ink for inkjet printing, but is preferred to be 30 mass% or more and 95 mass% or less, and more preferred to be 30 mass% or more and 50 mass% or less.

The edible ink for inkjet printing according to the present embodiment may further comprise ethanol in order to further improve quick-drying properties. The content of ethanol is preferred to be 0.1 mass% or more and 10 mass% or less relative to the total mass of the edible ink for inkjet printing.

### [Edible pigment]

The edible pigment is not specifically limited as long as it is a pigment that is edible, and thus can be selected from food additives and pharmaceutical additives. For example, at least one of vegetable charcoal pigment, iron sesquioxide (Fe₂O₃), iron tetroxide (Fe₃O₄), titanium dioxide (TiO₂), and lake pigment can be selected.

Specific examples of the lake pigment include Food Red No. 2 Aluminum Lake, Food Red No. 3 Aluminum Lake, Food Red No. 40 Aluminum Lake, Food Yellow No. 4 Aluminum Lake, Food Yellow No. 5 Aluminum Lake, Food Blue No. 1 Aluminum Lake, and Food Blue No. 2 Aluminum Lake.

The content of the edible pigment is not specifically limited, but if a vegetable charcoal pigment is used as the edible pigment, the content is preferred to be a content giving an absorbance of 380 or more and 1,000 or less to the edible ink for inkjet printing. That is, the content is preferred to be 1.2 mass% or more and 3.1 mass% or less relative to the total mass of the edible ink for inkjet printing. Under use conditions requiring higher quick-drying properties, and in order to improve chromaticity of printed matter even with a small amount of ink ejected, the content is preferred to be a content giving an absorbance of 600 or more and 1,000 or less to the edible ink for inkjet printing. That is, the content is preferred to be 1.9 mass% or more and 3.1 mass% or less relative to the total mass of the edible ink for inkjet printing.

If iron sesquioxide is used as an edible pigment, the content thereof is preferred to be 1 mass% or more and 40 mass% or less relative to the total mass of the edible ink for inkjet printing. If iron tetroxide is used as an edible pigment, the content thereof is preferred to be 1 mass% or more and 40 mass% or less relative to the total mass of the edible ink for inkjet printing. If titanium oxide is used as an edible pigment, the content thereof is preferred to be 5 mass% or more and 20 mass% or less relative to the total mass of the edible ink for inkjet printing. If a lake pigment is used as an edible pigment, the content thereof is preferred to be 2.5 mass% or more and 10 mass% or less relative to the total mass of the edible ink for inkjet printing.

### [Humectant]

The edible ink for inkjet printing according to the present embodiment may further contain a humectant. The humectant is not specifically limited as long as it is edible, but is preferred to be at least either of propylene glycol (CH₃CH(OH)CH₂OH, boiling point: 188.2°C) and glycerin (CH₂(OH)CH(OH)CH₂OH, boiling point: 290°C). The content of the humectant is preferred to be 0.1 mass% or more and 15 mass% or less relative to the total mass of the edible ink for inkjet printing, but is more preferred to be 1 mass% or more and 10 mass% or less. If a humectant with the above content is contained, excellent quick-drying properties of the edible ink for inkjet printing can be maintained, and deterioration in intermittent printing resumability can be suppressed.

In addition to propylene glycol and glycerin, the following humectants can also be used. Examples of the humectant include ethylene glycol, diethylene glycol, triethylene glycol, pentamethylene glycol, trimethylene glycol, 2-butene-1,4-diol, 2-ethyl-1,3-hexanediol, 2-methyl-2,4-pentanediol, tripropylene glycol, polyethylene glycols having a number average molecular weight of 2,000 or less, 1,3-propylene glycol, isopropylene glycol, isobutylene glycol, mesoerythritol, pentaerythritol, 2-pyrrolidone, N-methyl-2-pyrrolidone, and N-ethyl-2-pyrrolidone.

### [Dispersant and binder]

The edible ink for inkjet printing according to the present embodiment may further contain at least either of a dispersant and a binder. If a dispersant is contained, it has a function of improving dispersibility of edible pigments. Accordingly, if a dispersant is contained in the edible ink for inkjet printing according to the present embodiment, dispersion stability may be improved even when stored for a long period of time. If a binder is contained, it has a function of improving viscosity of the edible ink for inkjet printing according to the present embodiment to control printability.

The content of a dispersant and/or a binder is preferred to be 0.1 mass% or more and 15 mass% or less relative to the total mass of the edible ink for inkjet printing, but is more preferred to be 0.5 mass% or more and 10 mass% or less, and even more preferred to be 1 mass% or more and 5 mass% or less. If the content of the total mass of the dispersant and/or binder is within the above ranges, excellent quick-drying properties of the edible ink for inkjet printing may be maintained, and deterioration in intermittent printing resumability may be suppressed. If at least either of a dispersant and a binder is contained when the content of the edible pigment is high, in particular, dispersion of the edible pigment is stabilized, and dispersion stability is improved even when the ink is stored for a long period of time.

The dispersant is not specifically limited as long as it is edible, and thus can be selected from food additives and pharmaceutical additives. For example, the dispersant is preferred to be at least one of a polyol, saturated fatty acid ester, and unsaturated fatty acid ester.

Examples of the polyol include sugar alcohols such as polyethylene glycol, sorbitol, mannitol, xylitol, maltitol, and dipentaerythritol.

Examples of the saturated fatty acid ester include sucrose saturated fatty acid esters, polyglycerol fatty acid esters, sorbitan fatty acid esters, propylene glycol fatty acid esters, and organic acid monoglycerides. Examples of saturated fatty acids of the saturated fatty acid esters include lauric acid, myristic acid, palmitic acid, and stearic acid.

Examples of the unsaturated fatty acid ester include sucrose unsaturated fatty acid esters, lecithin, enzyme-treated lecithin, and Quillaja saponin. Examples of unsaturated fatty acids of the unsaturated fatty acid esters include oleic acid, linoleic acid, and α-linolenic acid.

The binder is not specifically limited as long as it is edible, and thus can be selected from food additives and pharmaceutical additives. For example, the binder is preferred to be at least either of a polysaccharide and a disaccharide.

Examples of the polysaccharide include maltodextrin, erythritol, polyvinylpyrrolidone, dextran, polydextrose, starch substances, carboxymethylcellulose, hydroxymethylcellulose, sodium alginate, gum arabic, locust bean gum, trant gum, guar gum, and tamarind seed. The polysaccharide is more preferred to have a weight average molecular weight of 1,000 or more and 10,000 or less.

Examples of the disaccharide include isomalto-oligosaccharide, trehalose, maltose, sucrose, and lactose.

These dispersants and binders may be used singly or in combination of two or more.

The edible ink for inkjet printing according to the present embodiment may contain orally ingestible additives such as flavoring agents, preservatives, antifoamers, and bacteriostatic agents, in addition to the humectants, dispersants, binders, and the like mentioned above.

### Examples

Hereinafter, the present invention will be described in detail by way of Examples and Comparative Examples.

### <Method of producing edible ink for inkjet printing>

Water, organic solvents, edible pigments, humectants, dispersants, binders, etc. were mixed in a mass ratio shown in Tables 1 to 4 to prepare edible inks for inkjet printing of Examples 1 to 33 and Comparative Examples 1 to 8.

The preparation procedure is shown below. First, water, organic solvents, and humectants were mixed each other to obtain a mixed solvent. Next, the mixed solvent was mixed with an edible pigment and a dispersant, and then a binder was mixed. Subsequently, the mixture was placed in a dispersing machine such as a paint shaker, and refined and dispersed for a specified period of time. Finally, the dispersed mixture was passed through membrane filters to remove solid foreign matter. Specifically, each of the inks was passed once through a membrane filter (cellulose acetate film) having a pore size of 5.0 µm, and subsequently, was passed once through a membrane filter (cellulose acetate film) having a pore size of 0.8 µm. In this way, the edible inks for inkjet printing of Examples 1 to 33 and Comparative Examples 1 to 8 were prepared.

The materials used for producing the edible inks for inkjet printing of Examples 1 to 33 and Comparative Examples 1 to 8 are specifically described below.

As water, purified water (ion-exchanged water) was used. As organic solvents, ethanol, 1-propanol, and 1-butanol were used. As humectants, propylene glycol and glycerin were used.

As dispersants, decaglycerin laurate (Poem J-0021 manufactured by Riken Vitamin Co., Ltd.), polyethylene glycol (PEG-1540), and sucrose fatty acid ester (DK Ester SS manufactured by DKS Co., Ltd.) were used. As binders, trehalose and maltodextrin were used. In Comparative Example 1, methylparaben, propylparaben, and butylparaben were added as preservatives.

**[Table 1]**

| | | Comp. Ex. 1 | Comp. Ex. 2 | Ex. 1 | Ex. 2 | Ex. 3 | Ex. 4 | Ex. 5 | Ex. 6 | Ex. 7 | Ex. 8 |
|---|---|---|---|---|---|---|---|---|---|---|---|
| Edible pigment | Vegetable charcoal pigment Content | 1.17 | 2.3 | 2.5 | 2.5 | 2.5 | 2.5 | 2.5 | 2.5 | 1.2 | 1.9 |
| | Absorbance | 380 | 750 | 800 | 800 | 800 | 800 | 800 | 800 | 380 | 600 |
| | Iron sesquioxide | | | | | | | | | | |
| | Iron tetroxide | | | | | | | | | | |
| | Titanium dioxide | | | | | | | | | | |
| | Food Red No. 3 Aluminum Lake | | | | | | | | | | |
| Solvent | Water | 63.48 | 86.6 | 68.2 | 63.7 | 45.5 | 27.3 | 4.5 | 45.4 | 64.6 | 64.1 |
| | Ethanol | | | | | | | | 4.6 | | |
| | 1-propanol | | 4.6 | 22.8 | 27.3 | 45.5 | 63.7 | 86.5 | 41.0 | 27.7 | 27.5 |
| | 1-butanol | | | | | | | | | | |
| Humectant | Propylene glycol | 35.00 | 1.5 | 1.5 | 1.5 | 1.5 | 1.5 | 1.5 | 1.5 | 1.5 | 1.5 |
| | Glycerin | | 1.5 | 1.5 | 1.5 | 1.5 | 1.5 | 1.5 | 1.5 | 1.5 | 1.5 |
| Dispersant | Decaglycerin laurate | 0.20 | | | | | | | | | |
| | Polyethylene glycol | | | | | | | | | | |
| | Sucrose fatty acid ester | | 3.00 | 3.00 | 3.00 | 3.00 | 3.00 | 3.00 | 3.00 | 3.00 | 3.00 |
| Binder | Trehalose | | 0.50 | 0.50 | 0.50 | 0.50 | 0.50 | 0.50 | 0.50 | 0.50 | 0.50 |
| | Maltodextrin | | | | | | | | | | |
| Preservative | Methylparaben | 0.05 | | | | | | | | | |
| | Propylparaben | 0.05 | | | | | | | | | |
| | Butylparaben | 0.05 | | | | | | | | | |
| Transfer resistance | | Poor | Poor | Good | Good | Good | Good | Good | Good | Good | Good |
| Intermittent printing resumability | | Good | Good | Good | Good | Good | Good | Good | Good | Good | Good |
| Dispersion stability (3 months) | | Good | Good | Good | Good | Good | Good | Good | Good | Good | Good |
| Dispersion stability (6 months) | | Good | Good | Good | Good | Good | Good | Good | Good | Good | Good |

| | | | | | | | | | | | |
|---|---|---|---|---|---|---|---|---|---|---|---|
| *) The unit of values is mass% except for the absorbance of vegetable charcoal pigment. | | | | | | | | | | | |

**[Table 2]**

| | | Ex. 9 | Ex. 10 | Ex. 11 | Ex. 12 | Ex. 13 | Ex. 14 | Ex. 15 | Ex. 16 | Ex. 17 | Ex. 18 |
|---|---|---|---|---|---|---|---|---|---|---|---|
| Edible pigment | Vegetable charcoal pigment Content | 3.1 | 4.0 | 2.5 | 2.5 | 2.5 | 2.5 | 2.5 | 2.5 | 2.5 | 2.5 |
| | Absorbance | 1,000 | 1,300 | 800 | 800 | 800 | 800 | 800 | 800 | 800 | 800 |
| | Iron sesquioxide | | | | | | | | | | |
| | Iron tetroxide | | | | | | | | | | |
| | Titanium dioxide | | | | | | | | | | |
| | Food Red No. 3 Aluminum Lake | | | | | | | | | | |
| Solvent | Water | 63.3 | 62.7 | 68.2 | 67.5 | 67.5 | 61.2 | 61.2 | 57.7 | 66.0 | 66.0 |
| | Ethanol | | | | | | | | | | |
| | 1-propanol | 27.1 | 26.8 | 29.3 | 29.0 | 29.0 | 26.3 | 26.3 | 24.8 | 28.3 | 28.3 |
| | 1-butanol | | | | | | | | | | |
| Humectant | Propylene glycol | 1.5 | 1.5 | | 1.0 | | 10.0 | | 10.0 | 1.5 | 1.5 |
| | Glycerin | 1.5 | 1.5 | | | 1.0 | | 10.0 | 5.0 | 1.5 | 1.5 |
| Dispersant | Decaglycerin laurate | | | | | | | | | 0.20 | |
| | Polyethylene glycol | | | | | | | | | | 0.20 |
| | Sucrose fatty acid ester | 3.00 | 3.00 | | | | | | | | |
| Binder | Trehalose | 0.50 | 0.50 | | | | | | | | |
| | Maltodextrin | | | | | | | | | | |
| Preservative | Methylparaben | | | | | | | | | | |
| | Propylparaben | | | | | | | | | | |
| | Butylparaben | | | | | | | | | | |
| Transfer resistance | | Good | Good | Good | Good | Good | Good | Fair | Fair | Good | Good |
| Intermittent printing resumability | | Good | Good | Fair | Good | Good | Good | Good | Good | Good | Good |
| Dispersion stability (3 months) | | Good | Good | Good | Good | Good | Good | Good | Good | Good | Good |
| Dispersion stability (6 months) | | Good | Fair | Good | Good | Good | Good | Good | Good | Good | Good |

| | | | | | | | | | | | |
|---|---|---|---|---|---|---|---|---|---|---|---|
| *) The unit of values is mass% except for the absorbance of vegetable charcoal pigment. | | | | | | | | | | | |

14

**[Table 3]**

| | | Ex. 19 | Ex. 20 | Ex. 21 | Ex. 22 | Ex. 23 | Ex. 24 | Ex. 25 | Ex. 26 | Comp. Ex. 3 | Ex. 27 |
|---|---|---|---|---|---|---|---|---|---|---|---|
| Edible pigment | Vegetable charcoal pigment Content | 2.5 | 2.5 | 2.5 | 2.5 | | | | | 2.5 | 2.5 |
| | Absorbance | 800 | 800 | 800 | 800 | | | | | 800 | 800 |
| | Iron sesquioxide | | | | | 10.0 | | | | | |
| | Iron tetroxide | | | | | | 10.0 | | | | |
| | Titanium dioxide | | | | | | | 10.0 | | | |
| | Food Red No. 3 Aluminum Lake | | | | | | | | 5.0 | | |
| Solvent | Water | 65.4 | 66.1 | 65.4 | 55.6 | 58.4 | 58.4 | 58.4 | 61.9 | 86.4 | 68.2 |
| | Ethanol | | | | | | | | | | |
| | 1-propanol | 28.1 | 28.4 | 28.0 | 23.9 | 25.1 | 25.1 | 25.1 | 26.6 | | |
| | 1-butanol | | | | | | | | | 4.6 | 22.8 |
| Humectant | Propylene glycol | 1.5 | 1.5 | 1.5 | 1.5 | 1.5 | 1.5 | 1.5 | 1.5 | 1.5 | 1.5 |
| | Glycerin | 1.5 | 1.5 | 1.5 | 1.5 | 1.5 | 1.5 | 1.5 | 1.5 | 1.5 | 1.5 |
| Dispersant | Decaglycerin laurate | | | | | | | | | | |
| | Polyethylene glycol | | | | | | | | | | |
| | Sucrose fatty acid ester | | | 1.00 | 10.00 | 3.00 | 3.00 | 3.00 | 3.00 | 3.00 | 3.00 |
| Binder | Trehalose | | | 0.10 | 5.00 | 0.50 | 0.50 | 0.50 | 0.50 | 0.50 | 0.50 |
| | Maltodextrin | 1.00 | | | | | | | | | |
| Preservative | Methylparaben | | | | | | | | | | |
| | Propylparaben | | | | | | | | | | |
| | Butylparaben | | | | | | | | | | |
| Transfer resistance | | Good | Good | Good | Fair | Good | Good | Good | Good | Poor | Fair |
| Intermittent printing resumability | | Good | Good | Good | Good | Good | Good | Good | Good | Good | Good |
| Dispersion stability (3 months) | | Good | Good | Good | Good | Good | Good | Good | Good | Good | Good |
| Dispersion stability (6 months) | | Good | Fair | Good | Good | Good | Good | Good | Good | Good | Good |

| | | | | | | | | | | | |
|---|---|---|---|---|---|---|---|---|---|---|---|
| *) The unit of values is mass% except for the absorbance of vegetable charcoal pigment. | | | | | | | | | | | |

**[Table 4]**

| | | Ex. 28 | Ex. 29 | Ex. 30 | Ex. 31 | Ex. 32 | Ex. 33 | Comp. Ex. 4 | Comp. Ex. 5 | Comp. Ex. 6 | Comp. Ex. 7 | Comp. Ex. 8 |
|---|---|---|---|---|---|---|---|---|---|---|---|---|
| Edible pigment | Vegetable charcoal pigment Content | 2.5 | 2.5 | 2.5 | 2.5 | 2.5 | 2.5 | 2.5 | 2.5 | 2.5 | 2.5 | 2.5 |
| | Absorbance | 800 | 800 | 800 | 800 | 800 | 800 | 800 | 800 | 800 | 800 | 800 |
| | Iron sesquioxide | | | | | | | | | | | |
| | Iron tetroxide | | | | | | | | | | | |
| | Titanium dioxide | | | | | | | | | | | |
| | Food Red No. 3 Aluminum Lake | | | | | | | | | | | |
| Solvent | Water | 63.7 | 45.5 | 27.3 | 4.6 | 45.4 | 45.4 | 86.4 | 63.7 | 45.5 | 27.3 | 4.5 |
| | Ethanol | | | | | 4.6 | | 4.6 | 27.3 | 45.5 | 63.7 | 86.5 |
| | 1-propanol | | | | | | 22.8 | | | | | |
| | 1-butanol | 27.3 | 45.5 | 63.7 | 86.5 | 41.0 | 22.8 | | | | | |
| Humectant | Propylene glycol | 1.5 | 1.5 | 1.5 | 1.5 | 1.5 | 1.5 | 1.5 | 1.5 | 1.5 | 1.5 | 1.5 |
| | Glycerin | 1.5 | 1.5 | 1.5 | 1.5 | 1.5 | 1.5 | 1.5 | 1.5 | 1.5 | 1.5 | 1.5 |
| Dispersant | Decaglycerin laurate | | | | | | | | | | | |
| | Polyethylene glycol | | | | | | | | | | | |
| | Sucrose fatty acid ester | 3.00 | 3.00 | 3.00 | 3.00 | 3.00 | 3.00 | 3.00 | 3.00 | 3.00 | 3.00 | 3.00 |
| Binder | Trehalose | 0.50 | 0.50 | 0.50 | 0.50 | 0.50 | 0.50 | 0.50 | 0.50 | 0.50 | 0.50 | 0.50 |
| | Maltodextrin | | | | | | | | | | | |
| Preservative | Methylparaben | | | | | | | | | | | |
| | Propylparaben | | | | | | | | | | | |
| | Butylparaben | | | | | | | | | | | |
| Transfer resistance | | Good | Good | Good | Good | Good | Good | Poor | Good | Good | Good | Good |
| Intermittent printing resumability | | Good | Good | Good | Good | Good | Good | Good | Fair | Poor | Poor | Poor |
| Dispersion stability (3 months) | | Good | Good | Good | Good | Good | Good | Good | Fair | Fair | Poor | Poor |
| Dispersion stability (6 months) | | Good | Good | Good | Good | Good | Good | Good | Poor | Poor | Poor | Poor |

| | | | | | | | | | | | | |
|---|---|---|---|---|---|---|---|---|---|---|---|---|
| *) The unit of values is mass% except for the absorbance of vegetable charcoal pigment | | | | | | | | | | | | |

For the edible inks for inkjet printing of Examples 1 to 33 and Comparative Examples 1 to 8, various evaluations were conducted. That is, evaluations were conducted on transfer resistance of printed surfaces (quick-drying properties), intermittent printing resumability, and dispersion stability of edible pigments when stored for a long period of time. The evaluation results are shown in Tables 1 to 4. The evaluation method is as shown below.

### <Transfer resistance>

A drop-on-demand inkjet head driven by piezoelectric ceramic was used as an inkjet head of the inkjet printing device. The inkjet head had a print resolution of 600 dpi in a main scanning direction, and 600 dpi in a sub-scanning direction (conveyance direction of a recording medium, such as a tablet) and had 2,656 nozzles in total. Using the inkjet head, inkjet printing was performed on the surface of a tablet at a print drop volume of 12 pL per drop to print an image.

The tablet used for printing was a film-coated tablet, a type of tablet in which a coating layer was formed on the surface of the tablet. The coating layer was made of a mixture of hydroxypropyl cellulose, hydroxypropyl methylcellulose, etc. with polyethylene glycol, titanium oxide pigment, etc.

Transfer resistance was evaluated as follows. Specifically, 10 seconds after completing printing, a tablet attached to a digital force gauge was brought into contact with the printed side of the tablet with the image printed on it at a pressure of 2 to 3 N for 0.4 to 0.5 seconds to determine whether the ink printed on the tablet had transferred to the tablet brought into contact therewith.

In Tables 1 to 4, if there was no ink transfer, the ink was evaluated as Excellent, if ink transfer was so slight that it was difficult to visually confirm it, the ink was evaluated as Good, if ink transfer could be easily confirmed, although the color of the transferred ink was light, the ink was evaluated as Fair, and if the ink transferred in a dark color, the ink was evaluated as Poor.

### <Intermittent printing resumability>

A drop-on-demand inkjet head driven by piezoelectric ceramic was used as an inkjet head of the inkjet printing device. The inkjet head had a print resolution of 600 dpi in a main scanning direction, and 600 dpi in a sub-scanning direction (conveyance direction of a recording medium, such as a tablet) and had 2,656 nozzles in total.

An ink was filled in the inkjet head and left to stand for 30 to 120 minutes to prevent flushing. Using the inkjet head after being left for a specified period of time, inkjet printing was performed on copy paper at a print drop volume of 6 pL per drop to print a test pattern.

Based on the print conditions of the test pattern, it was determined whether all nozzles in the inkjet head were ejecting without misdirection or non-ejection. Based on the standing time for all the nozzles in the inkjet head to eject without misdirection or non-ejection, intermittent printing resumability was evaluated.

In Tables 1 to 4, if the standing time for all the nozzles in the inkjet head to eject without non-ejection was 60 minutes or more and less than 120 minutes, the ink was evaluated as Good, if the standing time was 30 minutes or more and less than 60 minutes, the ink was evaluated as Fair, and if the standing time was less than 30 minutes, the ink was evaluated as Poor.

### <Dispersion stability>

After leaving the edible ink for inkjet printing to stand at 40°C for 3 or 6 months, the median diameter of the edible pigment was measured. An increase in the median diameter of the edible pigment in the edible ink for inkjet printing from the median diameter before standing, means that particles of the edible pigment are aggregated, and that dispersion stability is low.

In Tables 1 to 4, if the increase in median diameter after leaving the ink to stand for 3 or 6 months was 10 nm or less compared to the median diameter immediately after ink preparation, the ink was evaluated as Good, similarly, if the increase in median diameter was more than 10 nm and 20 nm or less, the ink was evaluated as Fair, and similarly, if the increase in median diameter was more than 20 nm, the ink was evaluated as Poor.

From the results shown in Tables 1 to 4, it has been found that the edible inks for inkjet printing of Examples 1 to 33 have excellent intermittent printing resumability and excellent dispersion stability even when stored for a long period of time, as well as having good quick-drying properties, compared to the edible inks for inkjet printing of Comparative Examples 1 to 8.

## Claims

1. An edible ink for inkjet printing comprising water, an organic solvent, and an edible pigment, wherein the organic solvent comprises at least one of 1-propanol, 1-butanol, and 2-butanol; and a content of the organic solvent is 20 mass% or more and 95 mass% or less relative to a total mass of the edible ink for inkjet printing.

2. The edible ink for inkjet printing according to claim 1, further comprising a humectant, wherein the humectant comprises at least either of propylene glycol and glycerin; and a content of the humectant is 0.1 mass% or more and 10 mass% or less relative to a total mass of the edible ink for inkjet printing.

3. The edible ink for inkjet printing according to claim 1 or 2, further comprising at least either of a dispersant and a binder, wherein
the dispersant comprises at least one of a polyol, a saturated fatty acid ester, and an unsaturated fatty acid ester;
the binder comprises at least either of a polysaccharide and a disaccharide; and
a content of the dispersant and the binder is 0.1 mass% or more and 15 mass% or less relative to a total mass of the edible ink for inkjet printing.

4. The edible ink for inkjet printing according to claim 1 or 2, wherein the edible pigment comprises at least one of a plant charcoal pigment, iron sesquioxide, iron tetroxide, titanium dioxide, and a lake pigment.
